# EUROPEAN PATENT APPLICATION

(11) **EP 4 822 809 A1**
(43) Date of publication of application: **14.10.2026**
(21) Application number: 24900750.1
(22) Date of filing: 12.04.2024
(51) Int. Cl.: H01M 10/0585, H01M 10/04, H01M 10/052, H01M 50/105

(54) **ALL-SOLID RECHARGEABLE BATTERY**

(30) Priority: 06.12.2023 KR 20230175955
(71) Applicant: SAMSUNG SDI CO., LTD., Yongin-si, Gyeonggi-do 17084 (KR)
(72) Inventor: KIM, Riyul, Yongin-si, Gyeonggi-do 17084 (KR); SHIN, Isaac, Yongin-si, Gyeonggi-do 17084 (KR); SUH, Kwang Jong, Yongin-si, Gyeonggi-do 17084 (KR); RYU, Young Gyoon, Yongin-si, Gyeonggi-do 17084 (KR)
(74) Representative: Michalski Hüttermann & Partner mbB
(86) International application number: PCT/KR2024/004965
(87) International publication number: WO 2025/121560

(57) **Abstract**

An all-solid rechargeable battery is provided. The all-solid rechargeable battery includes: a plurality of unit cells each including a negative electrode, a solid electrolyte layer, and a positive electrode; first elastic sheets arranged between and on an outermost side of the plurality of unit cells to form a stack cell and configured to buffer a change in volume of the unit cells during charging and discharging; a second elastic sheet arranged on an outer side of the stack cell; and an end plate arranged on an outer side of the second elastic sheet, wherein the second elastic sheet includes a first layer configured to provide elastic force to the stack cell and a second layer interposed between the first layer and the end plate to provide stress relief.

## Description

### [Technical Field]

The present disclosure relates to an all-solid rechargeable battery.

### [Background Art]

Recently, in response to industrial demands, the development of batteries with high energy density and safety has been actively conducted. For example, lithium-ion batteries are being put into practical use not only in the fields of information-related devices and communication devices, but also in the field of automobiles. In the field of automobiles, safety is especially important because life is involved.

Lithium-ion batteries currently on the market use electrolyte solutions containing flammable organic solvents, so there is a possibility of overheating and fire in the event of a short circuit. Accordingly, an all-solid rechargeable battery using a solid electrolyte instead of an electrolyte solution has been proposed.

By not using flammable organic solvents, all-solid rechargeable batteries can greatly reduce the possibility of fire or explosion even in the event of a short circuit. Therefore, the all-solid-state batteries can greatly increase safety compared to lithium-ion batteries using electrolyte solutions.

The above-described information disclosed in the technology that serves as the background of the present disclosure is only for improving understanding of the background of the present disclosure, and thus may include information that does not constitute the related art.

### [Disclosure]

An embodiment provides an all-solid rechargeable battery that regulates a change in pressure resulting from a change in volume during charging and discharging under pressure. An embodiment provides an all-solid rechargeable battery that compensates for a thickness variation, which may lead to a non-uniform pressurization state inside a cell, and absorbs impacts.

An all-solid rechargeable battery according to an embodiment includes: a plurality of unit cells each including a negative electrode, a solid electrolyte layer, and a positive electrode; first elastic sheets arranged between and on an outermost side of the plurality of unit cells to form a stack cell and configured to buffer a change in volume of the unit cells during charging and discharging; a second elastic sheet arranged on an outer side of the stack cell; and an end plate arranged on an outer side of the second elastic sheet, wherein the second elastic sheet includes a first layer configured to provide elastic force to the stack cell and a second layer interposed between the first layer and the end plate to provide stress relief.

The all-solid rechargeable battery according to an embodiment may further include a pouch including the stack cell therein, and the second elastic sheet may be arranged between an outer surface of the pouch and an inner surface of the end plate.

The first layer may be arranged on the outer surface of the pouch to apply uniform pressure to the stack cell during discharging in which a thickness decreases, thereby buffering the change in volume of the stack cell during charging and discharging.

The second layer may make pressure uniform with respect to non-uniform thickness and surface undulation of the stack cell.

The all-solid rechargeable battery according to an embodiment may further include a pouch including the stack cell and the second elastic sheet therein, in which the second elastic sheet may be arranged between an outer surface of the stack cell and an inner surface of the pouch.

A loss tangent (tanδ1 = E1"/E1') of the first layer may be 0.01 to 0.1.

A loss tangent (tanδ2 = E2"/E2') of the second layer may be 0.2 to 0.3.

The first loss modulus (E1") of the first layer may be smaller than the second loss modulus (E2") of the second layer (E1" < E2").

The first storage modulus (E1') of the first layer may be smaller than the second storage modulus (E2') of the second layer (E1' < E2').

The first loss tangent (tanδ1) of the first layer may be smaller than the second loss tangent (tanδ2) of the second layer (tanδ1 < tanδ2).

According to an embodiment, the second elastic sheet composed of the first and second layers is provided on the outer side of the stack cell including the first elastic sheets between and on the outermost side of the unit cells, allowing for buffering the change in volume during charging and discharging under pressure and uniformly regulating the change in pressure resulting from the change in volume. Therefore, an embodiment can compensate for a thickness deviation in the stack cell and absorb impacts.

### [Description of the Drawings]

FIG. 1 is a longitudinal cross-sectional view showing an all-solid rechargeable battery according to an embodiment.
FIG. 2 is a longitudinal cross-sectional view showing that a lithium metal layer is formed in the all-solid rechargeable battery according to the embodiment.
FIG. 3 is a longitudinal cross-sectional view showing an all-solid rechargeable battery according to a first embodiment of the present invention.

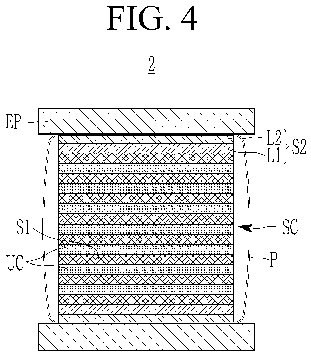

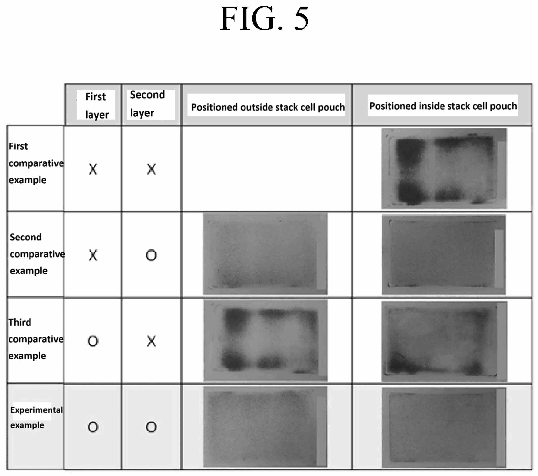

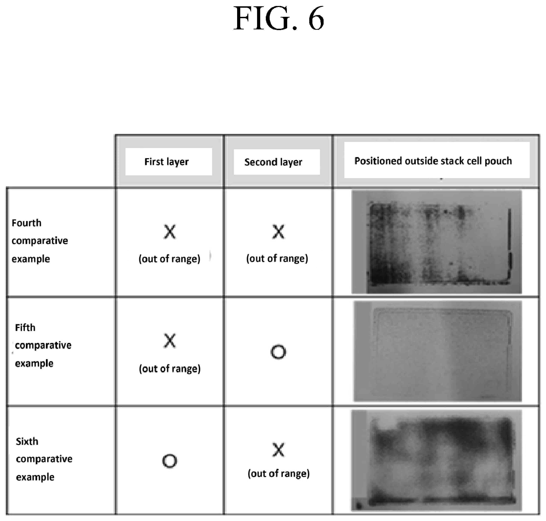

FIG. 4 is a longitudinal cross-sectional view showing an all-solid rechargeable battery according to a second embodiment of the present invention. FIG. 5 is a table that includes images showing intensities of fastening pressures appearing on the pressure-sensitive paper according to the first to third comparative examples and the experimental example in which the first and second layers were applied. FIG. 6 is a table that includes images showing intensities of fastening pressures appearing on the pressure-sensitive paper according to the fourth to sixth comparative examples in which the first and second layers were applied.

### [Mode for Invention]

In the following detailed description, only certain embodiments of the present invention have been shown and described, simply by way of illustration. As those skilled in the art would realize, the described embodiments may be modified in various different ways, all without departing from the spirit or scope of the present invention.

In addition, unless explicitly described to the contrary, the word "comprise", and variations such as "comprises" or "comprising", will be understood to imply the inclusion of stated elements but not the exclusion of any other elements.

In the drawings, the thickness of layers, films, panels, regions, etc., are exaggerated for clarity, and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface. Here, "or" is not to be construed as an exclusive meaning, and for example, "A or B" is construed to include A, B, A+B, and the like.

### Positive Electrode for All-Solid-State Secondary Battery

An embodiment provides a positive electrode for an all-solid rechargeable battery including a current collector and a positive electrode active material layer positioned on the current collector, wherein the positive electrode active material layer includes at least one of a positive electrode active material, a sulfide-based solid electrolyte, a binder, and a conductive material. However, without being limited thereto, the positive electrode for an all-solid rechargeable battery may include more or fewer components than the components described above.

In an embodiment, the positive electrode for an all-solid rechargeable battery is manufactured by applying a positive electrode composition including at least one of a positive electrode active material, a sulfide-based solid electrolyte, a binder, and a conductive material to a current collector, followed by drying and rolling.

### Positive Electrode Active Material

The positive electrode active material can be applied without limitation as long as it is commonly used for all-solid rechargeable batteries. For example, the positive electrode active material may be a compound capable of reversible intercalation and deintercalation of lithium and may include a compound represented by any one of the following chemical formulas.
LiₐA_{1-b}X_{b}D₂(0.90 ≤ a ≤ 1.8, 0 ≤ b ≤ 0.5);
LiₐA_{1-b}X_{b}O_{2-c}D_{c} (0.90 ≤ a ≤ 1.8, 0 ≤ b ≤ 0.5, 0 ≤ c ≤ 0.05);
LiₐE_{1-b}X_{b}O_{2-c}D_{c} (0.90 ≤ a ≤ 1.8, 0 ≤ b ≤ 0.5, 0 ≤ c ≤ 0.05);
LiₐE_{2-b}X_{b}O_{4-c}D_{c} (0.90 ≤ a ≤ 1.8, 0 ≤ b ≤ 0.5, 0 ≤ c ≤ 0.05);
LiₐNi_{1-b-c}Co_{b}X_{c}D_{α} (0.90 ≤ a ≤1.8, 0 ≤ b ≤ 0.5, 0 ≤ c ≤ 0.5, 0 <α ≤ 2);
LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 <α <2);
LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 <α <2);
LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);
LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);
LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);
LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂(0.90 ≤ a ≤ 1.8, 0 ≤ b ≤ 0.9, 0 ≤ c ≤ 0.5, 0 ≤ d ≤0.5, 0.001 ≤ e ≤ 0.1);
LiₐNiG_{b}O₂ (0.90 ≤ a ≤ 1.8, 0.001 ≤ b ≤ 0.1);
LiₐCoG_{b}O₂ (0.90 ≤ a ≤ 1.8, 0.001 ≤ b ≤ 0.1);
LiₐMn_{1-b}G_{b}O₂ (0.90 ≤ a ≤ 1.8, 0.001 ≤ b ≤ 0.1);
LiₐMn₂G_{b}O₄ (0.90 ≤ a ≤ 1.8, 0.001 ≤ b ≤ 0.1);
LiₐMn_{1-g}G_{g}PO₄ (0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li_{(3-f)}J₂ PO₄₃ (0 ≤ f ≤ 2);
Li _{(3-f)}Fe₂ PO₄₃ (0 ≤ f ≤ 2);
LiₐFePO₄ (0.90 ≤ a ≤ 1.8).

In the above Chemical Formulas, A is selected from the group consisting of Ni, Co, Mn, and a combination thereof; X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), and lithium nickel manganese oxide (NM), lithium manganese oxide (LMO), or lithium ferrous phosphate oxide (LFP).

The positive electrode active material may include a lithium nickel-based oxide represented by Chemical Formula 1 below, a lithium cobalt-based oxide represented by Chemical Formula 2 below, a lithium ferrous phosphate-based compound represented by Chemical Formula 3 below, or a combination thereof.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M¹ and M² are each one or more elements independently selected from the group consisting of Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Chemical Formula 2, 0.9≤a2≤1.8, 0.6≤x2≤1, and M³ is one or more elements selected from the group consisting of Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴₁₋ₓ₃PO₄

In Chemical Formula 3, 0.9≤a3≤1.8, 0.6≤x3≤1, and M⁴ is one or more elements selected from the group consisting of Al, B, Ba, Ca, Ce, Co, Cr, Cu, F, Fe, Mg, Mn, Mo, Nb, P, S, Si, Sr, Ti, V, W, and Zr.

An average particle diameter (D50) of the positive electrode active material may be 1 µm to 25 µm, for example, 3 µm to 25 µm, 5 µm to 25 µm, 5 µm to 20 µm, 8 µm to 20 µm, or 10 µm to 18 µm. The positive electrode active material having the particle diameter range can be harmoniously mixed with other components in the positive electrode active material layer and can implement the high capacity and high energy density.

The positive electrode active material may be in the form of a secondary particle made by agglomeration of a plurality of primary particles, or may be in the form of a single particle. In addition, the positive electrode active material may be spherical or close to a spherical shape, or may be polyhedral or amorphous.

### Sulfide-Based Solid Electrolyte

The sulfide-based solid electrolyte may include, for example, Li₂S-P₂S₅, Li₂S-P₂S₅-LiX(X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ(m and n are each an integer, and Z is Ge, Zn, or Ga), Li₂S-GeS₂, Li₂S-SiS₂-Li₃PO₄, Li₂S-SiS₂-LiₚMO_{q}(p and q are integers, and M is P, Si, Ge, B, Al, Ga, or In), or combination thereof.

The sulfide-based solid electrolyte may be obtained by, for example, mixing Li₂S and P₂S₅ at a molar ratio of 50:50 to 90:10 or 50:50 to 80:20 and optionally heat treating the mixture. Within the above mixing ratio range, a sulfide-based solid electrolyte with excellent ionic conductivity can be manufactured. Here, SiS₂, GeS₂, B₂S₃, and the like as other components may be further included to further improve the ionic conductivity.

A mechanical milling or solution method may be applied as a method of mixing sulfur-containing raw materials for producing a sulfide-based solid electrolyte. The mechanical milling is a method of making starting materials into particulates and mixing the same by putting the starting materials, ball mills, and the like in a reactor and intensely stirring them. In the solution method, starting materials may be mixed in a solvent to obtain a solid electrolyte as a precipitate. Furthermore, if heat treatment is performed after mixing, crystals of the solid electrolyte can become more rigid and ionic conductivity can be improved. As an example, the sulfide-based solid electrolyte can be manufactured by mixing sulfur-containing raw materials and heat-treating them two or more times. In this case, a sulfide-based solid electrolyte with high ionic conductivity and rigidity can be manufactured.

As an example, the sulfide-based solid electrolyte particles may include argyrodite-type sulfide. The argyrodite-type sulfide can be represented by, for example, Chemical Formula of LiₐM_{b}P_{c}S_{d}Aₑ (a, b, c, d, and e are all 0 or greater and 12 or less, M is metal excluding Li or a combination of a plurality of metals excluding Li, and A is F, Cl, Br, or I), and specifically, can be represented by Chemical Formula of Li₇₋ₓPS₆₋ₓAₓ (x is 0.2 or greater and 1.8 or less, and A is F, Cl, Br, or I). The argyrodite-type sulfide may be specifically Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, or the like.

A sulfide-based solid electrolyte particle containing such argyrodite-type sulfide has high ionic conductivity close to about 10⁻⁴ to about 10⁻² S/cm, which is ionic conductivity of a general liquid electrolyte, at room temperature, and thus, can form a close bond between the positive electrode active material and the solid electrolyte, and further, a close interface between the electrode layer and the solid electrolyte layer without deteriorating the ionic conductivity. An all-solid-state battery including the same may exhibit improved battery performance such as rate characteristics, coulombic efficiency, and life characteristics.

The argyrodite-type sulfide-based solid electrolyte may be manufactured by, for example, mixing lithium sulfide, phosphorus sulfide, and optionally lithium halide. After mixing them, heat treatment may be performed. The heat treatment may include, for example, two or more heat treatment steps.

An average particle diameter (D50) of the sulfide-based solid electrolyte particle according to an embodiment may be 5.0 µm or less, for example, 0.1 µm to 5.0 µm, 0.1 µm to 4.0 µm, 0.1 µm to 3.0 µm, 0.5 µm to 2.0 µm, or 0.1 µm to 1.5 µm. Alternatively, the sulfide-based solid electrolyte particle may be a small particle having an average particle diameter (D50) of 0.1 µm to 1.0 µm or a large particle having an average particle diameter (D50) of 1.5 µm to 5.0 µm, depending on the location or purpose of use. The sulfide-based solid electrolyte particle in the particle diameter range can effectively penetrate between solid particles in the battery, and has an excellent contact property with the electrode active material and connectivity between the solid electrolyte particles. The average particle diameter of the sulfide-based solid electrolyte particle may be measured using a microscope image. For example, a particle size distribution may be obtained by measuring sizes of about 20 particles in a scanning electron microscope image, and D50 may be calculated from the particle size distribution.

The content of the solid electrolyte in the positive electrode for an all-solid-state battery may be 0.5 wt% to 35 wt%, for example, 1 wt% to 35 wt%, 5 wt% to 30 wt%, 8 wt% to 25 wt%, or 10 wt% to 20 wt%. This is a content with respect to a total weight of components in the positive electrode, and specifically, may be a content with respect to a total weight of the positive electrode active material layer.

In an embodiment, the positive electrode active material layer may include 50 wt% to 99.35 wt% of the positive electrode active material, 0.5 wt% to 35 wt% of the sulfide-based solid electrolyte, 0.1 wt% to 10 wt% of the fluorine-based resin binder, and 0.05 wt% to 5 wt% of the vanadium oxide with respect to 100 wt% of the positive electrode active material layer. When such a content range is satisfied, the positive electrode for an all-solid rechargeable battery maintains high adhesive force and also maintains the viscosity of the positive electrode composition at an appropriate level while implementing high capacity and high ionic conductivity, thereby improving processability.

### Binder

The binder serves to properly adhere positive electrode active material particles to each other and to a current collector. Representative examples may include, but are not limited to, polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

### Conductive Material

The positive electrode active material layer may further include a conductive material. The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber containing copper, nickel, aluminum, silver, and the like; a conductive polymer such as a polyphenylene derivative; or a combination thereof.

The conductive material may be included in an amount of 0.1 wt% to 5 wt%, or 0.1 wt% to 3 wt% with respect to a total weight of each component of the positive electrode for the all-solid-state battery, or with respect to a total weight of the positive electrode active material layer. Within the above content range, the conductive material can improve electrical conductivity without deteriorating battery performance.

When the positive electrode active material layer further includes a conductive material, the positive electrode active material layer may include 45 wt% to 99.25 wt% of the positive electrode active material, 0.5 wt% to 35 wt% of the sulfide-based solid electrolyte, 0.1 wt% to 10 wt% of the fluorine-based resin binder, 0.05 wt% to 5 wt% of the vanadium oxide, and 0.1 wt% to 5 wt% of the conductive material with respect to 100 wt% of the positive electrode active material layer.

Note that the positive electrode for a lithium rechargeable battery may further include an oxide-based inorganic solid electrolyte, in addition to the solid electrolyte described above. The oxide-based inorganic solid electrolyte may include, for example, Li₁₊ₓTi₂₋ₓAl PO₄₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), PB (Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate(LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M= Te, Nb, or Zr; x is an integer from 1 to 10), or combination thereof.

### All-Solid-State Secondary Battery

An embodiment provides an all-solid rechargeable battery including the positive electrode described above, a negative electrode, and a solid electrolyte layer positioned between the positive electrode and the negative electrode. The all-solid rechargeable battery may also be expressed as an all-solid-state battery or an all-solid-state lithium rechargeable battery.

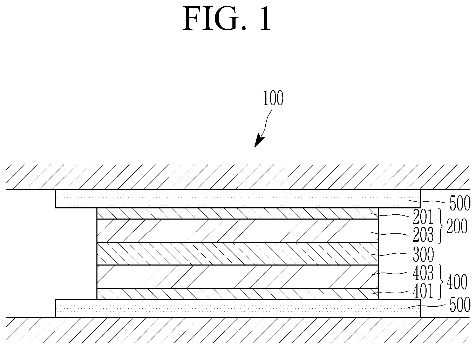

FIG. 1 is a cross-sectional view of an all-solid rechargeable battery according to an embodiment. Referring to FIG. 1, an all-solid rechargeable battery 100 may have such a structure that an electrode assembly in which a negative electrode 400 including a negative electrode current collector 401 and a negative electrode active material layer 403, a solid electrolyte layer 300, and a positive electrode 200 including a positive electrode active material layer 203 and a positive electrode current collector 201 are stacked is stored in a case such as a pouch. The all-solid rechargeable battery 100 may further include an elastic layer 500 on an outer side of at least one of the positive electrode 200 and the negative electrode 400. Although FIG. 1 shows one electrode assembly including the negative electrode 400, the solid electrolyte layer 300, and the positive electrode 200, an all-solid-state battery may be manufactured by stacking two or more electrode assemblies.

### Negative Electrode

The negative electrode for an all-solid-state battery may include, for example, a current collector and a negative electrode active material layer positioned on the current collector. The negative electrode active material layer includes a negative electrode active material and may further include a binder, a conductive material, and/or a solid electrolyte.

The negative electrode active material may include a material capable of reversibly intercalation/deintercalating lithium ions, lithium metal, an alloy of lithium metal, a material capable of being doped and undoped with respect to lithium, or a transition metal oxide.

The material capable of reversibly intercalating/deintercalating lithium ions is a carbon-based negative electrode active material, and may include, for example, crystalline carbon, amorphous carbon, or a combination thereof. Examples of the crystalline carbon may include graphite such as amorphous, plate-like, flake-like, spherical or fibrous natural graphite or artificial graphite, and examples of the amorphous carbon may include soft carbon or hard carbon, mesophase pitch carbide, fired coke, and the like.

For the alloy of the lithium metal, an alloy of lithium and one or more metal selected from Na, K, Rb, Cs, Fr, Be, Mg, Ca, Sr, Si, Sb, Pb, In, Zn, Ba, Ra, Ge, Al and Sn may be used.

For the material capable of being doped or undoped with respect to the lithium, a Si-based negative electrode active material or an Sn-based negative electrode active material may be used. Examples of the Si-based negative electrode active material may include silicon, silicon-carbon composite, SiOₓ (0<x<2), and a Si-Q alloy (Q is an element selected from the group consisting of alkali metals, alkali earth metals, Group 13 elements, Group 14 elements, Group 15 elements, Group 16 elements, transition metals, rare-earth elements, and combinations thereof, but is not Si). Examples of the Sn-based negative electrode active material may include Sn, SnO2, a Sn-R alloy (R is an element selected from the group consisting of alkali metals, alkali earth metals, Group 13 elements, Group 14 elements, Group 15 elements, Group 16 elements, transition metals, rare-earth elements, and combinations thereof, but is not Sn). In addition, a mixture of at least one thereof and SiO2 may be used. The elements Q and R may be selected and used from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and a silicon particle and an amorphous carbon coating layer positioned on a surface of the core. The crystalline carbon may be artificial graphite, natural graphite, or a combination thereof. As the amorphous carbon precursor, coal-based pitch, mesophase pitch, petroleum-based pitch, coal-based oil, petroleum-based heavy oil, or polymer resin such as phenol resin, furan resin, and polyimide resin may be used. In this case, a content of silicon may be 10 wt% to 50 wt% with respect to a total weight of the silicon-carbon composite. In addition, a content of the crystalline carbon may be 10 wt% to 70 wt% with respect to the total weight of the silicon-carbon composite, and a content of the amorphous carbon may be 20 wt% to 40 wt% with respect to the total weight of the silicon-carbon composite. In addition, a thickness of the amorphous carbon coating layer may be 5 nm to 100 nm.

An average particle diameter (D50) of the silicon particle may be 10 nm to 20 µm, and for example, 10 nm to 500 nm. The silicon particle may be present in an oxidized form, and in this case, an atomic content ratio of Si:O in the silicon particle, which indicates a degree of oxidation, may be 99:1 to 33:67. The silicon particle may be a SiOₓ particle, in which case a range of x in SiOx may be greater than 0 and less than 2. Here, the average particle diameter (D50) is measured with a particle size analyzer using a laser diffraction method and refers to a diameter of a particle with a cumulative volume of 50% by volume in the particle size distribution.

The Si-based negative electrode active material or Sn-based negative electrode active material may be used by mixing with a carbon-based negative electrode active material. A mixing ratio of the Si-based negative electrode active material or Sn-based negative electrode active material and the carbon-based negative electrode active material may be 1:99 to 90:10 at a weight ratio.

A content of the negative electrode active material in the negative electrode active material layer may be 95 wt% to 99 wt% with respect to the total weight of the negative electrode active material layer.

In an embodiment, the negative electrode active material layer further includes a binder, and optionally, may further include a conductive material. A content of the binder in the negative electrode active material layer may be 1 wt% to 5 wt% with respect to the total weight of the negative electrode active material layer. In addition, when a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to adhere the negative electrode active material particles to each other well and also to adhere the negative electrode active material to the current collector well. The binder may include a water-insoluble binder, a water-soluble binder, or a combination thereof.

Examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

Examples of the water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluoro rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, alkali metal salts thereof, or a combination thereof. As the alkali metal, Na, K, or Li may be used. An amount of such a thickener used may be 0.1 to 3 parts by weight with respect to 100 parts by weight of the negative electrode active material.

The conductive material is used to provide conductivity to an electrode, and may include, for example, a carbon-based material such as natural graphite, artificial graphite, carbon black, acetylene black, Ketjen black, a carbon fiber, and a carbon nanotube; a metal-based material in the form of metal powder or metal fiber including copper, nickel, aluminum, silver, and the like; a conductive polymer such as a polyphenylene derivative; or a mixture thereof.

The negative electrode current collector may be selected and used from a copper foil, a nickel foil, a stainless steel foil, a titanium foil, a nickel foam, a copper foam, a polymer substrate coated with a conductive metal, and a combination thereof.

As another example, the negative electrode for an all-solid-state battery may be a precipitation-type negative electrode. The precipitation-type negative electrode refers to a negative electrode in which a negative electrode active material is not included during assembling of a battery but lithium metal or the like is precipitated during charging of the battery and serves as a negative electrode active material.

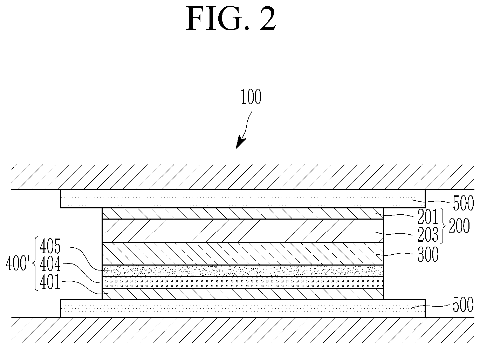

FIG. 2 is a schematic cross-sectional view of an all-solid rechargeable battery including a precipitation-type negative electrode according to an embodiment. Referring to FIG. 2, the precipitation-type negative electrode 400' may include a current collector 401 and a negative electrode coating layer 405 positioned on the current collector. In an all-solid-state battery having the precipitation-type negative electrode 400', initial charging begins in the absence of a negative electrode active material, and during the charging, lithium metal with a high density or the like is precipitated between the current collector 401 and the negative electrode coating layer 405 and forms a lithium metal layer 404, which can serve as a negative electrode active material. Accordingly, in an all-solid-state battery that has been charged once or more, the precipitation-type negative electrode 400' may include the current collector 401, the lithium metal layer 404 positioned on the current collector, and the negative electrode coating layer 405 positioned on the metal layer. The lithium metal layer 404 refers to a layer of lithium metal or the like precipitated during the charging process of the battery and may be called a metal layer or a negative electrode active material layer.

The negative electrode coating layer 405 may include metal, a carbon material, or a combination thereof that serves as a catalyst.

The metal may include, for example, gold, platinum, palladium, silicon, silver, aluminum, bismuth, tin, zinc, or a combination thereof, and may be composed of one selected therefrom or an alloy of more than one thereof. When the metal is present in the form of a particle, an average particle diameter (D50) thereof may be about 4 µm or less, for example, 10 nm to 4 µm.

The carbon material may be, for example, crystalline carbon, amorphous carbon, or a combination thereof. The crystalline carbon may be, for example, natural graphite, artificial graphite, a mesophase carbon microbead, or a combination thereof. The amorphous carbon may be, for example, carbon black, activated carbon, acetylene black, Denka black, Ketjen black, or a combination thereof.

When the negative electrode coating layer 405 includes both the metal and the carbon material, a mixing ratio of the metal and the carbon material may be, for example, 1:10 to 2:1 at a weight ratio. In this case, the precipitation of lithium metal can be effectively promoted and the characteristics of the all-solid-state battery can be improved. The negative electrode coating layer 405 may include, for example, a carbon material on which catalyst metal is supported, or a mixture of metal particles and carbon material particles.

The negative electrode coating layer 405 may include, for example, the metal and amorphous carbon, and in this case, the precipitation of lithium metal can be effectively promoted.

The negative electrode coating layer 405 may further include a binder, and the binder may be a conductive binder. Furthermore, the negative electrode coating layer 405 may further include general additives such as a filler, a dispersant, and an ion conductive material.

A thickness of the negative electrode coating layer 405 may be, for example, 100 nm to 20 µm, 500 nm to 10 µm, or 1 µm to 5 µm.

For example, the precipitation-type negative electrode 400' may further include a thin film on the surface of the current collector, that is, between the current collector and the negative electrode coating layer. The thin film may contain an element that can form an alloy with lithium. The element that can form an alloy with lithium may be, for example, gold, silver, zinc, tin, indium, silicon, aluminum, bismuth, and the like, and may be composed of one selected therefrom or an alloy of more than one thereof. The thin film can further planarize a precipitation shape of the lithium metal layer 404 and further improve the characteristics of the all-solid-state battery. The thin film may be formed by, for example, a vacuum deposition method, a sputtering method, a plating method, or the like. The thin film may have a thickness ranging from 1 nm to 500 nm, for example.

### Solid Electrolyte Layer

The solid electrolyte layer 300 may include a sulfide-based solid electrolyte, an oxide-based solid electrolyte, and the like. The specific descriptions of the sulfide-based solid electrolyte and the oxide-based solid electrolyte are the same as above.

In one example, the solid electrolyte included in the positive electrode 200 and the solid electrolyte included in the solid electrolyte layer 300 may include the same compound or different compounds. For example, when both the positive electrode 200 and the solid electrolyte layer 300 include an argyrodite-type sulfide-based solid electrolyte, the overall performance of the all-solid rechargeable battery may be improved. Furthermore, as an example, when both the positive electrode 200 and the solid electrolyte layer 300 include the coated solid electrolyte described above, the all-solid rechargeable battery can implement excellent initial efficiency and life characteristics while implementing a high capacity and a high energy density.

Note that an average particle diameter (D50) of the solid electrolyte layer included in the positive electrode 200 may be smaller than an average particle diameter (D50) of the solid electrolyte included in the solid electrolyte layer 300. In this case, the overall performance can be improved by maximizing the energy density of the all-solid-state battery and increasing the mobility of lithium ions. For example, the average particle diameter (D50) of the solid electrolyte included in the positive electrode 200 may be 0.1 µm to 1.0 µm, or 0.1 µm to 0.8 µm, and the average particle diameter (D50) of the solid electrolyte included in the solid electrolyte layer 300 may be 1.5 µm to 5.0 µm, 2.0 µm to 4.0 µm, or 2.5 µm to 3.5 µm. When the above particle diameter ranges are satisfied, the energy density of the all-solid rechargeable battery is maximized and the transfer of lithium ions is facilitated, making it possible to suppress resistance and thus to improve the overall performance of the all-solid rechargeable battery. Here, the average particle diameter (D50) of the solid electrolyte may be measured with a particle size analyzer using a laser diffraction method. Alternatively, a particle size distribution may be obtained by measuring sizes of about 20 particles randomly selected from a microscope image such as a scanning electron microscope, and a D50 value may be calculated from the particle size distribution.

The solid electrolyte layer may further include a binder, in addition to the solid electrolyte. In this case, for the binder, a styrene butadiene rubber, polytetrafluoroethylene, polyvinylidene fluoride, polyethylene, an acrylate-based polymer, or a combination thereof may be used, but the present invention is not limited thereto, and any binder used in the art can be used. The acrylate-based polymer may be, for example, butyl acrylate, polyacrylate, polymethacrylate, or a combination thereof.

The solid electrolyte layer may be formed by adding a solid electrolyte to a binder solution, coating a base film with the solution, and drying the resultant. A solvent for the binder solution may be isobutyl isobutyrate, xylene, toluene, benzene, hexane, or a combination thereof. A process of forming the solid electrolyte layer is widely known in the art, and therefore, a detailed description will be omitted.

A thickness of the solid electrolyte layer may be, for example, 10 µm to 150 µm.

The solid electrolyte layer may further include an alkali metal salt, and/or an ionic liquid, and/or a conductive polymer.

The alkali metal salt may be, for example, a lithium salt. A content of the lithium salt in the solid electrolyte layer may be 1 M or more, for example, 1 M to 4 M. In this case, the lithium salt can improve ionic conductivity by improving lithium ion mobility in the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate(LiBOB), lithium oxalyldifluoroborate (LIODFB), lithium difluoro(oxalato) borate (LiDFOB), lithium bis(trifluoro methanesulfonyl)imide (LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄ or a mixture thereof.

Furthermore, the lithium salt may be an imide-based salt. For example, the imide-based lithium salt may include lithium bis(trifluoro methanesulfonyl)imide (LiTFSI, LiN (SO₂CF₃)₂) and lithium bis(fluorosulfonyl)imide (LiFSI, LiN (SO₂F)₂). The lithium salt can maintain or improve ionic conductivity by appropriately maintaining chemical reactivity with an ionic liquid.

The ionic liquid refers to a salt or a room temperature molten salt that has a melting point equal to or lower than a room temperature, is in a liquid state at room temperature and is composed of only ions.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations and a mixture thereof, and b) one or more anions selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, FSO₂₂N-, (C₂F₅SO₂)2N-, (C₂F₅SO₂, CF₃SO₂)N-, and (CF₃SO₂)₂N-.

The ionic liquid may be, for example, one or more selected from the group consisting of N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90: 10, 40:60 to 90:10, or 50:50 to 90:10. The solid electrolyte layer that satisfies the above range can maintain or improve ionic conductivity by improving an electrochemical contact area with the electrode. Accordingly, the energy density, discharge capacity, rate characteristics, and the like of the all-solid-state battery can be improved.

The all-solid-state battery may be a unit battery having a structure of a positive electrode/a solid electrolyte layer/a negative electrode, a bicell having a structure of a positive electrode/a solid electrolyte layer/a negative electrode/a solid electrolyte layer/a positive electrode, or a stacked battery in which the structure of the unit cell is repeated.

A shape of the all-solid-state battery is not particularly limited, and may be, for example, a coin type, a button type, a sheet type, a stack type, a cylindrical shape, a flat type, or the like. In addition, the all-solid-state battery may also be applied to large-sized batteries used in electric vehicles, and the like. For example, the all-solid-state battery may also be used in a hybrid vehicle such as a plug-in hybrid electric vehicle (PHEV). Furthermore, it can be used in fields that require a large amount of power storage, and for example, can also be used for an electric bicycle, an electric tool or the like.

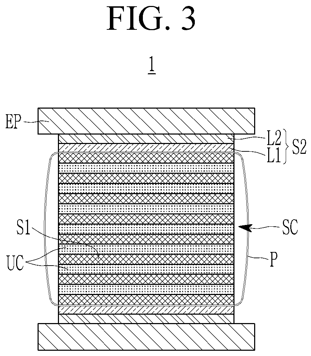

FIG. 3 is a longitudinal cross-sectional view showing an all-solid rechargeable battery according to a first embodiment of the present invention. Referring to FIG. 3, an all-solid rechargeable battery 1 of the first embodiment includes a plurality of unit cells UC, a first elastic sheet S1, a second elastic sheet S2, and an end plate EP.

The unit cell UC includes the negative electrode 400, the solid electrolyte layer 300, and the positive electrode 200, as shown in FIG. 1, and may be formed as a bi-cell. A stack cell SC includes the plurality of unit cells UC and is formed by arranging the first elastic sheet S1 between the unit cells UC and arranging the first elastic sheet S1 on the outermost side of the unit cells UC.

The first elastic sheets S1 are arranged between and on the outermost side of the plurality of unit cells UC to form the stack cell SC and serve to buffer changes in volume of the unit cells UC during charging and discharging. The second elastic sheet S2 is arranged on an outer side of the first elastic sheet S1 arranged on the outermost side of the plurality of unit cells UC and may be formed in a multi-layer.

During manufacturing of the stack cell SC, both surfaces of the stack cell SC may become non-uniform due to various components, foreign matters, alignment errors, and the like. In addition, when applying pressure to the stack cell SC from both ends, pressure may be applied non-uniformly to each area due to the surface non-uniformity.

The first elastic sheet S1 and the second elastic sheet S2 can buffer the changes in volume during charging and discharging, allowing uniform pressure to be applied to the stack cell SC even when the surface of the stack cell SC is non-uniform.

The second elastic sheet S2 includes a first layer L1 that provides elastic force to the stack cell SC composed of a combination of the first elastic sheets S1 and the unit cells UC, and a second layer L2 interposed between the first layer L1 and the end plate EP to provide stress relief.

The first layer L1 has elastic force, allowing uniform pressure to be applied to the unit cells UC through the first elastic sheets S1 even during the discharge process in which the thickness decreases. Therefore, the first layer L1 can buffer the changes in volume of the stack cell SC during charging and discharging together with the first elastic sheets S1. In addition to buffering the changes in volume through the first layer L1, the second layer L2 can equalize pressure non-uniformity due to the non-uniform thickness and surface undulation of the stack cell SC through stress relief.

Comparing the first layer L1 and the second layer L2 in the second elastic sheet S2, the first layer L1 has relatively low stress relief performance but excellent elasticity, making it possible to buffer the change in pressure due to the change in thickness during charging and discharging. In this respect, a storage modulus (E1') is more important than a loss modulus (E1") because elastic force is important for the first layer L1. Therefore, a loss tangent (tanδ1) is relatively smaller in the first layer Li than in the second layer L2.

The second layer L2 has relatively high stress relief performance but low elasticity, making it possible to improve non-uniformity due to the surface undulation. In this respect, a loss modulus (E2") of the second layer L2 is the most important, and a loss tangent (tanδ2) is relatively larger compared to the first layer L1.

The all-solid rechargeable battery 1 of the first embodiment further includes a pouch P including the stack cell SC therein. The second elastic sheet S2 is arranged between an outer surface of the pouch P and an inner surface of the end plate EP. The second elastic sheet S2 is provided outside the stack cell SC.

In this case, too, the first layer L1 is arranged on the outer surface of the pouch P, allowing uniform pressure to be applied to the stack cell SC during the discharge process in which the thickness of the stack cell SC decreases, thereby buffering the changes in volume of the stack cell SC during charging and discharging. The second layer L2 is arranged on the outer surface of the first layer L1, allowing pressure to be uniform with respect to the non-uniform thickness and surface undulation of the stack cell SC.

**(Table 1)**

| | | first layer | second layer |
|---|---|---|---|
| thickness | | 300 µm | 500 µm |
| 25°C | E' (MPa) | 2.4 | 103.8 |
| | E" (MPa) | 0.2 | 21.5 |
| | tanδ | 0.09 | 0.2 |
| 45°C | E' (MPa) | 2.4 | 18.1 |
| | E" (MPa) | 0.2 | 3.6 |
| | tanδ | 0.1 | 0.2 |

Referring to Table 1, the loss tangent (tanδ1 = E1"/E1') obtained by the loss modulus (E1")/storage modulus (E1') in the first layer L1 is 0.01 to 0.1, and the loss tangent (tanδ1 = E1"/E1') obtained from the experimental value is 0.09 to 0.1. The loss tangent (tanδ2= E2"/E2') obtained by the loss modulus (E2")/storage modulus (E2') in the second layer L2 is 0.2 to 0.3, and the loss tangent (tanδ2= E2"/E2') obtained from the experimental value is 0.2.

The first loss modulus (E1") of the first layer L1 is smaller than the second loss modulus (E2") of the second layer L2 (E1" < E2"). The first storage modulus (E1') of the first layer L1 is smaller than the second storage modulus (E2') of the second layer L2 (E1' < E2'). The first loss tangent (tanδ1) of the first layer L1 is smaller than the second loss tangent (tanδ2) of the second layer L2 (tanδ1 < tanδ2).

Using dynamic mechanical analysis (DMA) equipment, the loss moduli (E1" and E2") and storage moduli (E1' and E2') of the first and second layers L1 and L2 of the second elastic sheet S2 were confirmed and compared through a modulus scan according to temperatures.

That is, it was confirmed that the first loss tangent (tanδ1) is smaller than the second loss tangent (tanδ2) (tanδ1<tanδ2) in the first and second layers L1 and L2. Therefore, it can be seen that the second layer L2 exhibits the favorable stress relief characteristics both at room temperature and at the temperature at which the cell is operated. That is, it can be seen that it is important for the second elastic sheet S2 to include the second layer L2 together with the first layer L1.

FIG. 4 is a longitudinal cross-sectional view showing an all-solid rechargeable battery according to a second embodiment of the present invention. Referring to FIG. 4, an all-solid rechargeable battery 2 of the second embodiment further includes a pouch P including the stack cell SC and the second elastic sheet S2 therein. The second elastic sheet S2 is arranged between the outer surface of the stack cell SC and the inner surface of the pouch P.

Even in this case, the first layer L1 allows uniform pressure to be applied to the stack cell SC during the discharge process in which the thickness of the stack cell SC decreases, thereby buffering the changes in volume of the stack cell SC during charging and discharging. The second layer L2 is arranged on the inner surface of the pouch P, allowing pressure to be uniform with respect to the non-uniform thickness and surface undulation of the stack cell SC.

To this end, by arranging a pressure-sensitive paper sheet, referred to as a pressure measurement film, was arranged between the end plate EP and the stack cell SC, and applying pressure to the end plate EP, the uniformity of pressure in the all-solid rechargeable batteries 1 and 2 was confirmed.

The uniformity of the fastening pressure in the all-solid rechargeable batteries 1 and 2 was confirmed based on the presence or absence or positions of the first and second layers L1 and L2 in the second elastic sheet S2. In other words, the uniformity of the fastening pressure could be confirmed by the intensity distribution of red appearing on the pressure-sensitive paper sheet.

Referring to Fig. 5, in the all-solid rechargeable batteries 1 and 2 of the first and second embodiments, the degree and uniformity of the fastening pressure were not significantly affected by the position of the pouch P. It can be seen that positioning the pouch P surrounding the stack cell SC on the inner side or outer side of the first elastic sheet S2 does not affect the uniformity of the fastening pressure. That is, there was no significant difference in the image appearing red on the pressure-sensitive paper sheet.

In the experimental example with the first and second layers L1 and L2, the fastening pressure is uniform. That is, there is no significant difference in the image appearing red on the pressure-sensitive paper sheet. Therefore, it can be seen that the second layer L2 with favorable stress relief characteristics is necessary to reduce the non-uniformity of the fastening pressure, and the first layer L1 with favorable elastic force characteristics is necessary for normal cell operation.

In the first and third comparative examples without the second layer L2, the fastening pressure is non-uniform. That is, there was a significant difference in intensity in the image appearing red on the pressure-sensitive paper sheet. Therefore, it can be seen that the second layer L2 with favorable stress relief characteristics is necessary to reduce the difference in strength, that is, to reduce the non-uniformity of the fastening pressure.

In the first and second comparative examples without the first layer L1, cell operation was not performed. Red did not appear on the pressure-sensitive paper sheet. In other words, in this case, the driving characteristic data could not be confirmed. Therefore, it can be seen that the first layer L1 with favorable elastic force characteristics is necessary for normal cell operation.

In relation to Table 1, the first layer L1 with the loss tangent (tanδ1 = E1"/E1') within the range of 0.01 to 0.1 and the second layer L2 with the loss tangent (tanδ1 = E1"/E1') within the range of 0.2 to 0.3 are necessary.

Fig. 6 shows the distribution of the fastening pressure when the loss tangent (tanδ1 = E1"/E1') of at least one of the first and second layers is 0.6 to 0.7. In the fourth comparative example, it can be seen that the loss tangent of the first and second layers is 0.6 to 0.7, and the distribution of the fastening pressure is non-uniform. That is, it can be seen that the fastening pressure is not regulated uniformly.

In the fifth comparative example, it can be seen that the loss tangent of the first layer is 0.6 to 0.7, the loss tangent of the second layer (tanδ1 = E1"/E1') is 0.2 to 0.3, and the distribution of the fastening pressure is non-uniform. That is, it can be seen that the fastening pressure is not regulated uniformly.

In the sixth comparative example, it can be seen that the loss tangent of the second layer is 0.6 to 0.7, the loss tangent of the first layer (tanδ1 = E1"/E1') is 0.01 to 0.1, and the distribution of the fastening pressure is non-uniform. That is, it can be seen that the fastening pressure is not regulated uniformly.

In the fourth comparative example in which the first and second layers, which were outside the range of the embodiment, were applied, the non-uniform pressure profile was the most severe. In the fifth comparative example in which the first layer L1 was outside the range of the embodiment, the uniformity was good, but sufficient pressure was not applied. In the sixth comparative example in which the second layer L2 was outside the range, it can be seen that sufficient pressure was applied, but the uniformity was significantly reduced.

As a result, it can be seen that the first and second layers L1 and L2 need to fulfil their respective functions and have functionally necessary roles. That is, it can be seen that the first layer L1 is necessary for normal operation of the cell, and the second layer L2 is necessary for reducing the non-uniformity of the fastening pressure, i.e., the stress relief.

The first and second embodiments can buffer the change in volume during charging and discharging and uniformly regulate the change in pressure resulting from the change in volume through the first and second layers L1 and L2 in the stack cell SC under pressure. Therefore, the first and second embodiments can absorb impacts by compensating for a thickness deviation through the first and second layers L1 and L2 in the stack cell SC.

What has been described above is only one embodiment for carrying out a method for manufacturing an all-solid-state battery, a process plate, and an all-solid-state battery according to the present disclosure, and the present disclosure is not limited to the embodiments. However, the technical spirit of the present disclosure lies in that one skilled in the art could make various changes, as defined in the claims below, without departing from the gist of the present disclosure.

### <Description of symbols>

| | | | |
|---|---|---|---|
| 1, 2: | all-solid rechargeable battery | 100: | all-solid rechargeable battery |
| 200: | positive electrode | 400, 400': | negative electrode |
| 201: | positive electrode current collector | | |
| 203: | positive electrode active material layer | | |
| 300: | solid electrolyte layer | 401: | negative electrode current collector |
| 403: | negative electrode active material layer | | |
| 404: | lithium metal layer | | |
| 405: | negative electrode coating layer | EP: | end plate |
| L1: | first layer | L2: | second layer |
| P: | pouch | S1: | first elastic sheet |
| S2: | second elastic sheet | SC: | stack cell |
| UC: | unit cell | | |

## Claims

1. An all-solid rechargeable battery comprising:
a plurality of unit cells each comprising a negative electrode, a solid electrolyte layer, and a positive electrode;
first elastic sheets arranged between and on an outermost side of the plurality of unit cells to form a stack cell and configured to buffer a change in volume of the unit cells during charging and discharging;
a second elastic sheet arranged on an outer side of the stack cell; and
an end plate arranged on an outer side of the second elastic sheet, wherein the second elastic sheet comprises
a first layer configured to provide elastic force to the stack cell, and
a second layer interposed between the first layer and the end plate to provide stress relief.

2. The all-solid rechargeable battery of claim 1, further comprising:
a pouch comprising the stack cell therein,
wherein the second elastic sheet is arranged between an outer surface of the pouch and an inner surface of the end plate.

3. The all-solid rechargeable battery of claim 2, wherein:
the first layer is arranged on the outer surface of the pouch and configured to apply uniform pressure to the stack cell during discharging in which a thickness decreases, thereby buffering the change in volume of the stack cell during charging and discharging.

4. The all-solid rechargeable battery of claim 3, wherein:
the second layer makes pressure uniform with respect to non-uniform thickness and surface undulation of the stack cell.

5. The all-solid rechargeable battery of claim 1, further comprising:
a pouch comprising the stack cell and the second elastic sheet therein,
wherein the second elastic sheet is arranged between an outer surface of the stack cell and an inner surface of the pouch.

6. The all-solid rechargeable battery of claim 1, wherein:
a loss tangent (tanδ1 = E1"/E1') of the first layer is 0.01 to 0.1.

7. The all-solid rechargeable battery of claim 2, wherein:
a loss tangent (tanδ2 = E2"/E2') of the second layer is 0.2 to 0.3.

8. The all-solid rechargeable battery of claim 1, wherein:
the first loss modulus (E1") of the first layer is smaller than the second loss modulus (E2") of the second layer (E1" < E2).

9. The all-solid rechargeable battery of claim 1, wherein:
the first storage modulus (E1') of the first layer is smaller than the second storage modulus (E2') of the second layer (E1' < E2').

10. The all-solid rechargeable battery of claim 1, wherein:
the first loss tangent (tanδ1) of the first layer is smaller than the second loss tangent (tanδ2) of the second layer (tanδ1 < tanδ2).
